# EUROPÄISCHE PATENTSCHRIFT

(11) **EP 0 709 388 B1**
(45) Veröffentlichungstag und Bekanntmachung des Hinweises auf die Patenterteilung: **18.04.2001**
(21) Anmeldenummer: 95113267.9
(22) Anmeldetag: 24.08.1995
(51) Int. Cl.: C07F 7/02, C07F 7/04

(54) **Verfahren zur Herstellung von Hydrogenalkoxysilanen**
Process for the preparation of alkoxy silanes
Procédé de préparation d'alcoxysilanes

(30) Priorität: 25.10.1994 DE 4438032
(43) Veröffentlichungstag der Anmeldung: 01.05.1996
(73) Patentinhaber: Degussa-Hüls Aktiengesellschaft, 60287 Frankfurt am Main (DE)
(72) Erfinder: Standke, Burkhard, Dr., D-79540 Lörrach (DE); Albert, Frings, Dr., D-79618 Rheinfelden (DE); Horn, Michael, Dr., D-79618 Rheinfelden (DE); Kötzsch, Hans-Joachim, Dr., D-79618 Rheinfelden (DE); Kropfgans, Frank, Dr., D-79618 Rheinfelden (DE); Monkiewicz, Jaroslaw, Dr., D-79618 Rheinfelden (DE); Seiler, Claus-Dietrich, Dr., D-79618 Rheinfelden (DE); Srebny, Hans-Günther, Dr., D-48249 Dülmen (DE)

(56) Entgegenhaltungen:
- EP-A- 0 280 517
- EP-A- 0 448 404
- FR-A- 2 154 728
- CHEMICAL ABSTRACTS, vol. 109, no. 19, 7.November 1988 Columbus, Ohio, US; abstract no. 170639b, WADA, H. ET AL. 'SOLVENT RECYCLE IN PREPARATION FROM SILICON AND ALCOHOLS' Seite 741; & JP-A-63 156 793 (MITSUBISHI KASEI CORP)

## Beschreibung

Die Erfindung betrifft ein Verfahren zur Herstellung von Hydrogenalkoxysilanen der allgemeinen Formel I

Hₙ Si[O(CH₂)ₘ CH₃]₄₋ₙ (I),

in der n eine ganze Zahl von 1 bis 3 bedeutet und m den Wert 0, 1 oder 2 annehmen kann, durch direkte Umsetzung von metallischem Silicium mit Alkoholen unter Zusatz geeigneter, kupferhaltiger Katalysatoren.

Hydrogenalkoxysilane stellen eine wichtige Gruppe von anorganischen Siliciumverbindungen dar. Über die Si-H-Funktion sind mittels Hydrosilylisierungsverfahren Organosilane zugänglich, welche gewöhnlich nur über Veresterung von Chlorsilanen gewonnen werden können. Des weiteren kann über basisch katalysierte Dismutierung von Hydrogenalkoxysilanen Monosilan in hoher Reinheit, beispielsweise für Halbleiteranwendungen, gewonnen werden.

Es ist bekannt, Verbindungen der allgemeinen Formel I durch Veresterung der entsprechenden Hydrogenchlorsilane oder eleganter unter Umgehung der Chlorsilane über direkte Umsetzung von metallischem, pulverisiertem Silicium mit entsprechenden Alkoholen bei Temperaturen oberhalb 100 °C unter Verwendung von kupferhaltigen Katalysatoren herzustellen (z.B. US 2.473.260, US 3.641.077, DE 258.961). Die technisch und wirtschaftlich interessantesten Verfahren verwenden inerte Wärmeträgeröle als Reaktionsmedium. Hierbei wird die kupferhaltige Silicium-Kontaktmasse in einem inerten, flüssigen Medium suspendiert und bei Temperaturen oberhalb 100 °C durch Einleiten von flüssigem oder gasförmigem Alkohol zu dem gewünschten Hydrogenalkoxysilan umgesetzt. Die Maximaltemperatur, bei der dieses Verfahren angewandt werden kann, wird durch die Thermostabilität des verwendeten Wärmeträgeröls vorgegeben.
Als hauptsächliche Nebenprodukte werden bei der bekannten Direktsynthese Tetraalkoxysilane sowie Siloxane gebildet. Tetraalkoxysilane entstehen hauptsächlich durch direkte Reaktion von Alkohol mit Silicium oder durch Reaktion von Hydrogenalkoxysilanen mit Alkohol unter Freisetzung von Wasserstoff. Siloxane bilden sich hauptsächlich durch Hydrolyse der Alkoxysilane. Das hierzu notwendige Wasser kann aus dem verwendeten Alkohol in gelöster Form stammen oder entsteht thermisch bzw. katalytisch durch Abspaltung von Wasser aus Ethanol unter Bildung von Ethylen.
In der Vergangenheit wurden diverse Reaktionsflüssigkeiten für die hier behandelte Reaktion verwendet. Beim Studium der Literatur fällt auf, daß Selektivität der Reaktion sowie Ausnutzbarkeit des eingesetzten Siliciums (Si-Umsatz) von der Qualität des verwendeten inerten Reaktionsmediums abhängig sind. So wird beispielsweise bei der Verwendung von Siliconöl als Reaktionsmedium eine Selektivität von 77 % bei der Herstellung von Triethoxysilan und nur 50 % bei Trimethoxysilan bei geringer Gesamtausnutzung des eingesetzten Si erhalten (US 3.641.077); verbessert wurde das Verfahren durch Verwendung von Alkylbenzolen (EP 0.280.517, US 4.931.578 mit 88,2 % Selektivität und 81 % Si-Umsatz bei der Trimethoxysilansynthese` mit dem Nachteil, daß zur Aktivierung der Kontaktmasse Methylchlorid eingesetzt werden muß). Ein Öl aus aromatischen Kohlenwasserstoffen mit 2 bis 4 Ringen sowie 1<n<4 Alkylgruppen mit weniger als 4 C-Atomen der allgemeinen Formeln C₁₀H₈₋ₙRₙ, C₁₂H₁₀₋ₙRₙ [Mineralölcrackprodukt, enthält Schwefel = Katalysatorgift] liefert 94 % Selektivität mit dem Nachteil, daß zur Aktivierung des Siliciums Fluorwasserstoff eingesetzt werden muß (DE 2.247.872).
Des weiteren wurden in der Vergangenheit als inerte Reaktionsmedien verwendet:
Diphenyloxid (JP 1002693),
Isoparaffingemische (JP 57108095),
Dodecylbenzol (JP 57108094, JP 3027493, JP 3156793),
Ditoluole (JP 54163529),
teilhydrierte Terphenyle (Therminol 59, US 5.084.590, EP 0.462.359).
Die aufgeführten Verbindungen sind zwar technisch gut verfügbar (Wärmeträgeröle), jedoch lassen sich mit ihnen keine technisch befriedigenden Werte für Selektivität und Silicium-Umsatz erhalten. Dies ist der Hauptgrund dafür, daß das Verfahren zur direkten Umsetzung von metallischem Silicium mit Ethanol oder Methanol noch nicht großtechnisch genutzt wird, obwohl hierfür eine dringliche Notwendigkeit besteht, da das

Alternativverfahren (Veresterung von Chlorsilanen) technisch aufwendig ist.

Weiterhin ist bekannt, daß die Verwendung gewisser Wärmeträgerflüssigkeiten bei der Ausführung der Reaktion zu Schäumungsproblemen führt (Vergleichsbeispiel 3 in DE 2.247.872), was im großtechnischen Maßstab katastrophale Folgen haben könnte.
Es bestand daher das Problem, verbesserte Reaktionsmedien für die besagte Reaktion sowie Zusatzstoffe, die ein Schäumen der Reaktionsmischung verhindern, aufzufinden.

Überraschenderweise wurde gefunden, daß sich Tritoluole und Tetratoluole als inerte Reaktionsmedien für die kupferkatalysierte Umsetzung von metallischem Silicium mit Alkoholen zu Hydrogenalkoxysilanen besser eignen als die im Stand der Technik beschriebenen Substanzen. Gelegentlich auftretende Schaumbildung, insbesondere am Ende der Reaktion, konnte durch Zugabe geringer Mengen handelsüblicher Siliconöle sicher kontrolliert werden.
Die erfindungsgemäß eingesetzten Wärmeträgeröle sind - gegebenenfalls substituierte - Tritoluole, Tetratoluole oder deren Gemische. Als Substituenten sind insbesondere Alkylgruppen vorhanden. Besonders bevorzugt werden ein Wärmeträgeröl aus einem Tritoluol-Isomerengemisch mit einer CH₃-Gruppe bzw. zwei CH₃-Gruppen je Tritoluolmolekül und/oder einem Tetratoluol-Isomerengemisch mit einer oder zwei CH₃-Gruppen je Tetratoluolmolekül eingesetzt.

Tritoluole und Tetratoluole besitzen eine ausgezeichnete Temperaturstabilität und eine sehr gute Beständigkeit gegenüber den erfindungsgemäß eingesetzten und entstehenden Substanzen. Silicium-Pulver sowie Katalysator lassen sich sehr homogen in Tri- und Tetratoluol dispergieren, so daß eine hervorragende Wärmeübertragung (Vermeidung der Ausbildung von örtlich auftretenden Überhitzungen aufgrund der exothermen Reaktion) sowie eine sehr gute Katalysatorverteilung erreicht werden. Die verwendeten Tri- und Tetratoluole haben weiterhin den Vorteil, daß sie die bekannten Katalysatorgifte Schwefel und Zinn nicht enthalten.

Beim Einleiten von Ethanol in die heiße Reaktionsmischung kommt es, insbesondere wenn Ethanoldampf fein verdüst wird und am Ende der Reaktion, zu unerwünschter Schaumbildung, was dazu führen kann, daß die Silicium-Suspension über den Kolonnenschuß bis in die Destillatvorlage getragen wird. Überraschenderweise läßt sich dieser Effekt verhindern, wenn vor Auftreten der Schaumbildung ein Polysiloxan der Struktur 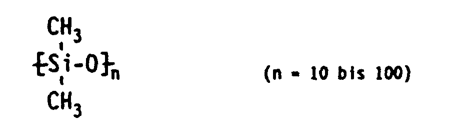 zugesetzt wird. Die hierzu notwendige Menge kann in weiten Bereichen variieren (0,001 bis 5 Gew.-%, bezogen auf die Gesamtreaktionsmasse). Bevorzugt wird der Bereich 0,01 bis 1 Gew.-%, bezogen auf die Gesamtreaktionsmasse, besonders bevorzugt 0,1 Gew.-%.
Es ist bekannt, für die in Rede stehende Reaktion als Katalysatoren pulverförmige, wasserfreie Kupferverbindungen einschließlich pulverisierten, wasserfreien Kupfers einzusetzen. In der DE 2247872 wird auf die technisch problemlose Verfügbarkeit und gute katalytische Wirksamkeit von Kupfer-(I)-chlorid hingewiesen. Aus der EP 0 462 359 ist bekannt, den Kupferkatalysator in einer Konzentration von 0,01 bis mehr als 5 Gew.-% einzusetzen. Die Erfindung wird nachfolgend anhand der Beispiele näher erläutert. In den erfindungsgemäßen Beispielen wurde bei einer Temperatur von 100 bis 350 °C gearbeitet. Als Alkohole wurden Methanol oder Ethanol eingesetzt. Das Methanol wies eine Reinheit von mehr als 98 % und einen Wassergehalt von weniger als 0,1 Gew.-% auf. Das eingesetzte Ethanol war mit Petrolether vergällt, hatte eine Reinheit von mehr als 98 % und einen Wassergehalt von weniger als 0,3 Gew.-%. Das erfindungsgemäße Verfahren kann jedoch auch mit Gemischen aus Methanol und Ethanol sowie mit anderen Alkanolen bzw. Alkanolgemischen durchgeführt werden.
Die für die erfindungsgemäßen Beispiele eingesetzten Reaktoren können aus Kupfer oder Glas bestehen oder innen emailliert sein. Vorzugsweise wird in Glasreaktoren gearbeitet. Als Katalysator wurde Kupfer-(I)-chlorid in einer Konzentration von 0,001 bis 5 Gew.-%, bezogen auf das eingesetzte Silicium, verwendet. Als Siliciumpulver diente ein handelsübliches Produkt mit einer mittleren Teilchengröße von 75 µm. Als Entschäumungsmittel wurde ein handelsübliches Dimethylpolysiloxan mit einem Molekulargewicht von 162 bis 74000 eingesetzt.

In einen temperierbaren Rührreaktor aus Glas mit einem Volumen von 500 ml, ausgestattet mit Alkoholzuführung über ein Tauchrohr, Temperaturregeleinrichtung, Stickstoffüberlagerung sowie einer Destillationsvorrichtung, bestehend aus einem 20-cm-Kolonnenstück (Füllung: Keramiksattelkörper), Kühler und Destillatvorlage, wurden Wärmeträgeröl, Siliconöl, Katalysatorpulver und Siliciumpulver eingefüllt und unter Rühren auf 250 °C aufgeheizt. Nach Erreichen der Solltemperatur wurde in einem Zeitraum von 4 Stunden über eine Dosierpumpe Alkohol mit einer Dosiergeschwindigkeit von ca. 5 ml/min zugeführt. Nach Beendigung der Reaktion wurde die Alkoholzufuhr unterbrochen, es wurden Gewicht und Zusammensetzung des Destillats bestimmt.

Die Zusammensetzung des Reaktionsprodukts (Destillat) wurde durch geeichte, quantitative gaschromatographische Auswertung bestimmt. Der Silicium-Umsatz wurde durch gravimetrische Bestimmung der Rest-Siliciummenge im Reaktor nach Beendigung der Reaktion ermittelt.

In den folgenden Beispielen wurden jeweils 30 g Silicium-Pulver, 250 g Wärmeträgeröl, 0,6 g Kupfer-(I)-chlorid und 0,06 g Methylsiliconöl eingesetzt.

### Beispiel 1

### Herstellung von Triethoxysilan unter Einsatz eines Tritoluol-Isomerengemisches als Wärmeträgeröl

Die Ausbeute an Triethoxysilan betrug 87 %, die Selektivität 95 %, der Silicium-Umsatz 92 % und die maximale Konzentration an Triethoxysilan 30 %.

### Beispiel 1a (Vergleichsbeispiel)

Das Beispiel wurde wie Beispiel 1 durchgeführt, jedoch ohne Verwendung eines Entschäumungsmittels. Die Ethanoldosierung mußte auf ca. 70 % gedrosselt werden, da sonst die Reaktionsmischung bis in das Kolonnenstück schäumte.

| | |
|---|---|
| Ausbeute an Triethoxysilan | = 75 % |
| Selektivität | = 95 % |
| Silicium-Umsatz | = 79 % |
| Maximale Konzentration an Triethoxysilan | = 25 % |

### Beispiel 2

### Herstellung von Trimethoxysilan unter Einsatz eines Tritoluol-Isomerengemisches als Wärmeträgeröl

| | |
|---|---|
| Ausbeute an Trimethoxysilan | = 85 % |
| Selektivität | = 91 % |
| Silicium-Umsatz | = 93 % |
| Maximale Konzentration an Trimethoxysilan | = 28 % |

### Beispiel 3

### Herstellung von Triethoxysilan unter Einsatz eines Tetratoluol-Isomerengemisches als Wärmeträgeröl

| | |
|---|---|
| Ausbeute an Triethoxysilan | = 70 % |
| Selektivität | = 83 % |
| Silicium-Umsatz | = 84 % |
| Maximale Konzentration an Triethoxysilan | = 20 % |

### Beispiel 4 (Vergleichsbeispiel)

### Herstellung von Triethoxysilan unter Einsatz von Dodecylbenzol mit einer stark verzweigten Alkylkette (Handelsprodukt ILEXAN der Fa. HÜLS AG) als Wärmeträgeröl

| | |
|---|---|
| Ausbeute an Triethoxysilan | = 37 % |
| Selektivität | = 78 % |
| Silicium-Umsatz | = 47 % |
| Maximale Konzentration an Triethoxysilan | = 14 % |

### Beispiel 5 (Vergleichsbeispiel)

### Herstellung von Triethoxysilan unter Einsatz von Dodecylbenzol (Handelsprodukt der Fa. MERCK) als Wärmeträgeröl

| | |
|---|---|
| Ausbeute an Triethoxysilan | = 37 % |
| Selektivität | = 91 % |
| Silicium-Umsatz | = 41 % |
| Maximale Konzentration an Triethoxysilan | = 8 % |

### Beispiel 6 (Vergleichsbeispiel)

### Herstellung von Triethoxysilan unter Einsatz von zu ca. 50 % teilhydriertem Terphenyl (Handelsprodukt SANTOTHERM 66 der Fa. MONSANTO) als Wärmeträgeröl

| | |
|---|---|
| Ausbeute an Triethoxysilan | = 69 % |
| Selektivität | = 91 % |
| Silicium-Umsatz | = 76 % |
| Maximale Konzentration an Triethoxysilan | = 18 % |

### Beispiel 7 (Vergleichsbeispiel)

### Herstellung von Triethoxysilan unter Einsatz eines mit einer Äthylgruppe alkylierten Diphenyls (Handelsprodukt THERM S 600 der Fa. NIPPON STEEL) als Wärmeträgeröl

| | |
|---|---|
| Ausbeute an Triethoxysilan | = 54 % |
| Selektivität | = 92 % |
| Silicium-Umsatz | = 59 % |
| Maximale Konzentration an Triethoxysilan | = 14 % |

### Beispiel 8 (Vergleichsbeispiel)

### Herstellung von Triethoxysilan unter Einsatz eines Gemisches aus Ditolylether-Isomeren (Handelsprodukt DIPHYL DT der Fa. BAYER AG) als Wärmeträgeröl

Es trat starke Schaumbildung auf, die auch durch Zusatz von Siliconöl nicht kontrolliert werden konnte. Eine Isolierung des Zielprodukts war nicht möglich.

## Patentansprüche

1. Verfahren zur Herstellung von Hydrogenalkoxysilanen der allgemeinen Formel I
Hₙ Si [O(CH₂)ₘ CH₃]₄₋ₙ (I),
in der n eine ganze Zahl von 1 bis 3 bedeutet und m den Wert 0, 1 oder 2 annehmen kann,
durch direkte Umsetzung von metallischem Silicium mit Alkoholen unter Zusatz geeigneter, kupferhaltiger Katalysatoren, dadurch gekennzeichnet, daß man das Silicium in feinverteilter Form in einem Wärmeträgeröl aus - gegebenenfalls substituierten - Tritoluolen, Tetratoluolen oder deren Gemischen bei einer Temperatur von 100 bis 350 °C mit Alkoholen oder Alkoholgemischen umsetzt.

2. Verfahren nach Anspruch 1, dadurch gekennzeichnet, daß man als Alkohol Methanol und/oder Ethanol einsetzt.

3. Verfahren nach Anspruch 1 oder 2, dadurch gekennzeichnet, daß man die Reaktion in Gegenwart eines Entschäumungsmittels auf Basis eines Organopolysiloxans durchführt.

4. Verfahren nach Anspruch 3, dadurch gekennzeichnet, daß man als Entschäumungsmittel ein Methylsiliconöl mit einem Molekulargewicht von 162 bis 74000 einsetzt.

5. Verfahren nach einem der Ansprüche 1 bis 4, dadurch gekennzeichnet, daß man als Katalysator Kupfer-(I)-chlorid in einer Konzentration von 0,001 bis 5 Gew.-%, bezogen auf das eingesetzte Silicium, verwendet.

## Claims

1. A process for preparing hydrogenalkoxysilanes of the general formula I
HₙSi[O(CH₂)ₘCH₃]₄₋ₙ (I),
where n is an integer from 1 to 3 and m can assume the value 0, 1 or 2,
by direct reaction of metallic silicon with alcohols with the addition of suitable, copper-containing catalysts, characterized in that the silicon is reacted in finely divided form in a heat-transfer oil comprising, if desired substituted, tritoluenes, tetratoluenes or mixtures thereof at a temperature of from 100 to 350°C with alcohols or alcohol mixtures.

2. A process according to claim 1, characterized in that methanol and/or ethanol is used as alcohol.

3. A process according to claim 1 or 2, characterized in that the reaction is carried out in the presence of an antifoaming agent based on an organopolysiloxane.

4. A process according to claim 3, characterized in that a methylsilicone oil having a molecular weight of from 162 to 74,000 is used as antifoaming agent.

5. A process according to any one of claims 1 to 4, characterized in that copper(I) chloride in a concentration of from 0.001 to 5% by weight, based on the silicon used, is used as catalyst.

## Revendications

1. Procédé de production d'hydrogène alcoxysilanes de formule générale I
Hₙ Si[O(CH₂)ₘ CH₃]₄ (I),
dans laquelle n représente un nombre entier allant de 1 à 3 et m peut prendre la valeur 0, 1 ou 2,
par réaction directe de silicium métallique avec des alcools avec addition de catalyseur contenant du cuivre approprié,
caractérisé en ce qu'
on fait réagir du silicium sous une forme finement divisée dans une huile caloporteuse constituée de tritoluène, de tétratoluène ou de leurs mélanges - éventuellement substitués - à une température de 100 à 350°C avec des alcools ou des mélanges d'alcools.

2. Procédé selon la revendication 1,
caractérisé en ce qu'
on utilise comme alcool le méthanol et/ou l'éthanol.

3. Procédé selon la revendication 1 ou 2,
caractérisé en ce qu'
on conduit la réaction en présence d'antimousse à base d'un organopolysiloxane.

4. Procédé selon la revendication 3,
caractérisé en ce qu'
on utilise comme antimousse une huile de méthylsilicone ayant un poids moléculaire de 162 à 74 000.

5. Procédé selon l'une des revendications 1 à 4,
caractérisé en ce qu'
on utilise comme catalyseur le chlorure de cuivre(I) à une concentration de 0,001 à 5 % en poids, par rapport au silicium utilisé.
